# EUROPEAN PATENT APPLICATION

(11) **EP 4 803 999 A1**
(43) Date of publication of application: **09.09.2026**
(21) Application number: 24915813.0
(22) Date of filing: 08.11.2024
(51) Int. Cl.: G06F 3/0484, G06F 3/0481, G06F 9/451, G06F 3/14, G01R 31/387, G06T 11/60, G09G 5/32

(54) **METHOD FOR DISPLAYING BACKGROUND IMAGE ACCORDING TO TRANSITION OF OPERATION STATE AND ELECTRONIC DEVICE PERFORMING METHOD**

(30) Priority: 03.01.2024 KR 20240001117; 12.01.2024 KR 20240005669; 01.04.2024 KR 20240044259
(71) Applicant: Samsung Electronics Co., Ltd., Suwon-si, Gyeonggi-do 16677 (KR)
(72) Inventor: KIM, Hyungmin, Suwon-si Gyeonggi-do 16677 (KR); LEE, Junho, Suwon-si Gyeonggi-do 16677 (KR); KWON, Banghyun, Suwon-si Gyeonggi-do 16677 (KR); YANG, Pilseung, Suwon-si Gyeonggi-do 16677 (KR); LEE, Jaemyoung, Suwon-si Gyeonggi-do 16677 (KR); LEE, Jaeho, Suwon-si Gyeonggi-do 16677 (KR)
(74) Representative: Gulde & Partner
(86) International application number: PCT/KR2024/017647
(87) International publication number: WO 2025/146924

(57) **Abstract**

An electronic device according to one embodiment may obtain a first image corresponding to a first screen outputted on a display in response to an input for switching an operation state from a first state to a second state, sequentially output each of a plurality of first switched images obtained by differently adjusting transparency of the first image, output a second image preset for a second mode, and output the second image while operating in the second mode.

## Description

### TECHNICAL FIELD

An embodiment relates to a technique for transitioning an operation state, and more particularly, to a technique for displaying a background image according to a transition of the operation state.

### BACKGROUND ART

Always on display (AOD) refers to a display that remains continuously on, and the AOD state indicates a state in which an electronic device controls the display in AOD mode. AOD is used in smartphones or smart wearable devices. Because the display remains on in the AOD state, the display may show information such as time, date, or notifications. For example, the AOD state may be used in an electronic device with an active matrix organic light-emitting diode (AMOLED) display or an OLED display. The AOD state may provide users with necessary information without activating the full display, offering convenience while minimizing battery consumption.

When a transition from a home screen state to an AOD state occurs, a screen in the home screen state is turned off and a screen in the AOD state is turned on, which may result in a visually unnatural transition.

### DISCLOSURE OF THE INVENTION

### TECHNICAL SOLUTIONS

According to an embodiment, an electronic device includes a display, at least one processor, and memory storing instructions, wherein the instructions, when executed by the at least one processor individually or collectively, may cause the electronic device to output, on the display, a first screen corresponding to a first state, receive an input for causing a transition from the first state to a second state while the first screen is output, in response to the input, obtain a first image corresponding to the first screen that is output on the display, sequentially output, on the display, a plurality of first transition images in which transparency of the first image is differently adjusted, and output, on the display, a second image corresponding to the second state.

According to an embodiment, a method of transitioning an operation state of an electronic device, includes outputting, on a display of the electronic device, a first screen corresponding to a first state, while the first screen is output, receiving an input for causing a transition from the first state to a second state, in response to the input, obtaining a first image corresponding to the first screen output on the display, sequentially outputting, on the display, a plurality of first transition images in which transparency of the first image is differently adjusted, and outputting, on the display, a second image corresponding to the second state.

According to an embodiment, an electronic device includes a battery, a display, at least one processor, and memory storing instructions, wherein the instructions, when executed by the at least one processor individually or collectively, may cause the electronic device to, in a first state in which first power is used from the battery, output, on the display, a first background image corresponding to a first frame of a specified video, determine whether a specified condition is satisfied while the first background image is output in the first state, when it is determined that the specified condition is satisfied, sequentially output a first intermediate image and a second intermediate image respectively corresponding to a first intermediate frame and a second intermediate frame between the first frame and a second frame of the specified video, and in a second state in which second power that is different from the first power is used from the battery, output, on the display, a second background image corresponding to the second frame of the specified video, wherein the second frame is different from the first frame.

### BRIEF DESCRIPTION OF THE DRAWINGS

FIG. 1 is a block diagram illustrating an electronic device in a network environment, according to an embodiment.
FIG. 2a illustrates an output screen that varies according to operation states, according to an embodiment.
FIG. 2b illustrates screens showing options for setting an always on display (AOD) state, according to an embodiment.
FIG. 3 is a flowchart of a method of transitioning an operation state, according to an embodiment.
FIG. 4a illustrates a screen that is output in a home screen state and a screen that is output in an AOD state, according to an embodiment.
FIG. 4b illustrates a screen that is output in an application execution state and a screen that is output in an AOD state, according to an embodiment.
FIG. 5 is a flowchart of a method of outputting any one of a plurality of second transition images generated based on a wallpaper image during a second operation state, according to an embodiment.
FIG. 6 is a flowchart of a method of outputting any one of a plurality of second transition images based on a first state of charge (SoC) of a battery, according to an embodiment.
FIG. 7 illustrates second transition images that are output according to different SoCs, according to an embodiment.
FIG. 8 is a flowchart of a method of outputting a graphic object together with a second image during a second operation state, according to an embodiment.
FIG. 9 illustrates an original image and images obtained by applying different image effects to the original image, according to an embodiment.
FIG. 10 is a flowchart of a method of transitioning an operation state, according to an embodiment.
FIG. 11 is a flowchart of a method of displaying a background image according to a transition of an operation state, according to an embodiment.
FIG. 12 is a flowchart of a method of determining a frame corresponding to each state, according to an embodiment.
FIG. 13 illustrates a frame corresponding to an AOD state, a frame corresponding to a lock screen state, and a frame corresponding to a home screen state among a plurality of frames of a target video, according to an embodiment.
FIG. 14 is a flowchart of a method of determining a first frame based on the position of a first graphic object displayed in a first state, according to an embodiment.
FIG. 15 illustrates a method of determining a first frame based on the position of a first graphic object displayed in a first state, according to an embodiment.
FIG. 16 is a flowchart of a method of determining a first frame based on the position of a first graphic object displayed in a first state, according to an embodiment.
FIG. 17 is a flowchart of a method of generating a target video based on a default video, according to an embodiment.
FIGS. 18a and 18b illustrate screens of a method of generating a target video based on a default video, according to an embodiment.
FIG. 19 is a flowchart of a method of generating a target video based on a default image, according to an embodiment.
FIG. 20 is a flowchart of a method of transitioning an operation state, according to an embodiment.
FIG. 21 illustrates a generative artificial intelligence (AI) system according to an embodiment.

### BEST MODE FOR CARRYING OUT THE INVENTION

Hereinafter, various embodiments of the present disclosure will be described with reference to the accompanying drawings. However, this is not intended to limit the present disclosure to specific embodiments, and it should be understood that various modifications, equivalents, and/or alternatives of the embodiments of the present disclosure are included.

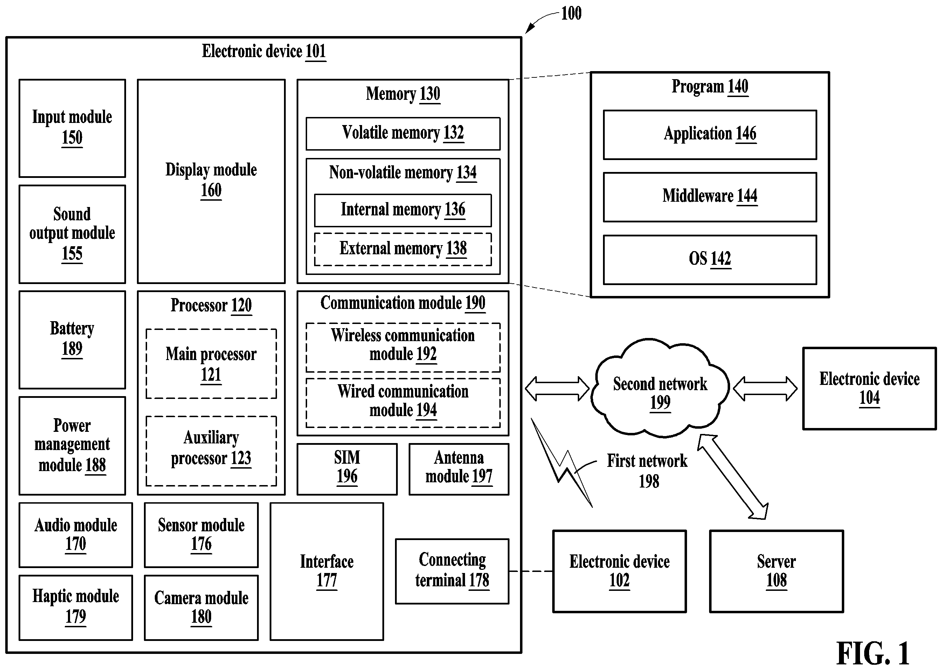

FIG. 1 is a block diagram illustrating an electronic device in a network environment, according to an embodiment.

FIG. 1 is a block diagram illustrating an electronic device 101 in a network environment 100, according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for AI model processing. An artificial intelligence (AI) model may be generated by machine learning. Such learning may be performed, e.g., by the electronic device 101 where the AI is performed or via a separate server (e.g., the server 108). Learning algorithms may include, but are not limited to, e.g., supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network or a combination of two or more thereof but is not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., a speaker or headphones) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments of the disclosure as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

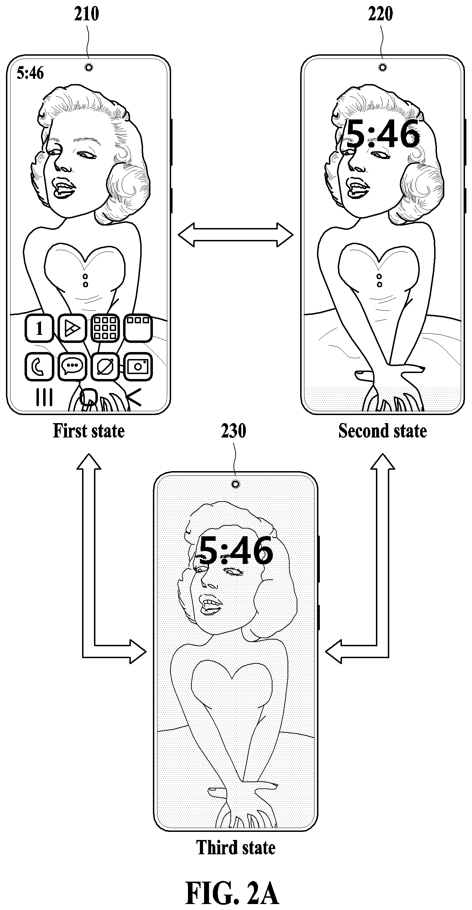

FIG. 2a illustrates an output screen that varies according to operation states, according to an embodiment.

According to an embodiment, an electronic device (e.g., the electronic device 101 of FIG. 1) may operate in an operation state (or operation mode) among a first state, a second state, and a third state.

For example, the first state may be a home screen state. The home screen state may be a state in which icons of one or more applications (hereinafter, referred to as "apps") installed on the electronic device are output on a display along with a wallpaper image (or background image) set on the electronic device. A screen of the display output in the home screen state may be a first screen 210. The first screen 210 may include a first layer on which a wallpaper image is displayed and a second layer on which icons of one or more apps are displayed. The first screen 210 may include an additional layer in which a search bar appears. A user may transmit a user input to the electronic device by touching a predetermined location on the first screen 210. The electronic device may be controlled based on the user input. For example, when the user touches a first icon of a first app, the first app may be executed.

For example, the second state may be a lock screen state. The lock screen state may be a state in which preset information is displayed on the display along with a wallpaper image set on the electronic device. For example, the lock screen state may be a state in which a digital clock is displayed on the wallpaper image. For example, information output in the lock screen state may be preset through a menu (or option) for setting the lock screen state. For example, the preset information may include at least one of clock information, weather information, battery information, and alarm information. In the lock screen state, one or more widgets and predetermined app shortcut icons may be output on the wallpaper image set on the electronic device.

A screen of the display output in the lock screen state may be a second screen 220. The second screen 220 may include a first layer on which the wallpaper image is output and a second layer on which preset information is output. The second screen 220 may include an additional layer related to an unlocking technique. For example, the additional layer may include an image representing a location where the fingerprint of the user is received. For example, the additional layer may include an image representing a keypad receiving a password. Even when the user touches a predetermined location on the second screen 220 in the lock screen state, the electronic device may disable the touch input. In the lock screen state, the electronic device may only process a user input for the additional layer. For example, the electronic device may unlock the electronic device based on the fingerprint of the user received through the additional layer.

For example, the third state may be an always on display (AOD) state. The AOD state may be a state in which the electronic device controls a display in an AOD mode. The AOD state may be a state in which preset information is output on the display along with an AOD image set for the AOD state. For example, information output in the AOD state may be preset through options (or menus) for setting the AOD state. For example, the preset information may include at least one of a clock, weather, battery information, and an alarm. A screen of the display output in the AOD state may be a third screen 230.

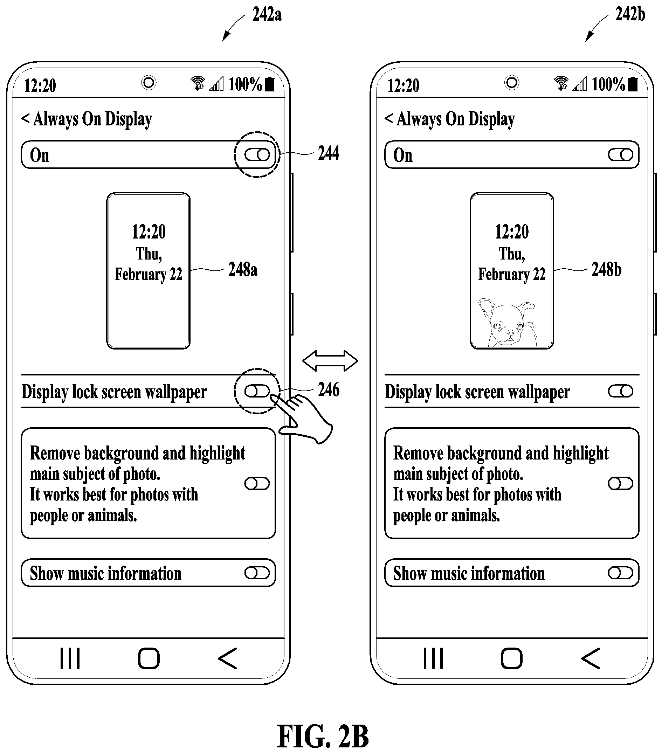

The third screen 230 may include a first layer on which the AOD image is output and a second layer on which preset information is output. Whether the AOD image is output in the AOD state depends on the settings for the AOD state. Whether the AOD image is output in the AOD state may be preset through the options (or menus) for setting the AOD state. For example, when the AOD image is set not to be output in the AOD state, the AOD image may not be displayed, and preset information may be output on the second layer. For example, when the AOD image is set to be output in the AOD state, the AOD image may be output on the first layer, and preset information may be output on the second layer. The options for setting the AOD state are described in detail below with reference to FIG. 2b.

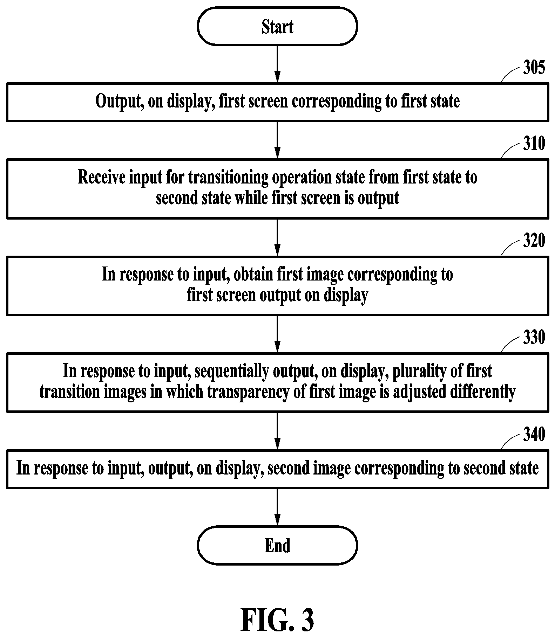

According to an embodiment, the AOD image may be an image generated based on a wallpaper image. When the display transitions from the home screen state or lock screen state to the AOD state, if the transition from the wallpaper image to the AOD image appears naturally, user satisfaction may be increased. A method of transitioning an operation state is described in detail below with reference to FIGS. 3 to 16.

FIG. 2b illustrates screens showing options for setting an AOD state, according to an embodiment.

An electronic device (e.g., the electronic device 101 of FIG. 1) may provide a user with options to control a setting for an AOD state.

According to an embodiment, the electronic device may provide the user with an option to turn on the AOD state. For example, when an option 244 displayed on a screen 242a is turned on, the AOD state may be turned on, and when the option 244 is turned off, the AOD state may be turned off. When the AOD state is turned off, the electronic device may not operate in the AOD state.

According to an embodiment, the electronic device may provide the user with an option to determine whether a wallpaper image (or background image) is output in the AOD state. For example, when an option 246 displayed on the screen 242a is turned off, the wallpaper image may not be output even if the electronic device operates in the AOD state. For example, when the option 246 displayed on a screen 242b is turned on, the wallpaper image may be output when the electronic device operates in the AOD state.

The electronic device may output a preview of the AOD state reflecting the selection result for the option 246. For example, the electronic device may output a preview screen 248a of the AOD state when the option 246 displayed on the screen 242a is turned off. The wallpaper image may not appear on the preview screen 248a. For example, the electronic device may output a preview screen 248b of the AOD state when the option 246 displayed on the screen 242b is turned on. The wallpaper image may appear on the preview screen 248b.

According to an embodiment, the electronic device may provide the user with an option to determine whether to output only a main object among one or more graphic objects in the wallpaper image in the AOD state.

According to an embodiment, the electronic device may provide the user with an option to determine whether to output, in the AOD state, information regarding music played.

FIG. 3 is a flowchart of a method of transitioning an operation state, according to an embodiment.

Operations 305 to 340 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 305, the electronic device may output, on a display, a first screen (e.g., the first screen 210 or the second screen 220 of FIG. 2a) corresponding to a first state. For example, the first state may be a home screen state, an application execution state, or a lock screen state. The application execution state may be a state in which an app is running and a screen of the app is output. For example, the second state may be an AOD state.

In operation 310, the electronic device may receive an input for transitioning an operation state from the first state to the second state while the first screen is output. For example, the input may be referred to as a state transition input.

According to an embodiment, the electronic device may receive an input from a user through an input module (e.g., the input module 150 of FIG. 1). For example, the user may transmit the state transition input to the electronic device by pressing a side button of the electronic device. For example, the user may transmit the state transition input to the electronic device by touching and dragging the display of the electronic device.

According to an embodiment, the electronic device may internally generate a state transition input when no user input is received for a preset time and may receive the generated state transition input.

According to an embodiment, the electronic device may transition the operation state from the first state to the second state at the time when the state transition input is received.

In operation 320, in response to the input, the electronic device may obtain a first image corresponding to the first screen output on the display. The first screen may be a screen that is output on the display at the time when the state transition input is received. For example, the first image may be a bitmap image.

According to an embodiment, the electronic device may generate the first image by capturing the first screen output on the display.

According to an embodiment, the electronic device may generate the first image by loading information regarding the first screen stored in memory or a buffer. For example, the information regarding the first screen stored in the memory or buffer may be pixel values for pixels of the display. For example, the information regarding the first screen stored in the memory or buffer may be information for rendering a screen.

In operation 330, in response to the input, the electronic device may sequentially (or consecutively) output a plurality of first transition images on the display. Each of the plurality of first transition images may have at least one differently adjusted attribute of the first image (e.g., transparency, color, shape, size, selection of a predetermined object, or some attributes of a predetermined object (e.g., an edge of a predetermined object)).

According to an embodiment, the fact that the plurality of first transition images, in which at least one attribute of the first image is adjusted differently, is sequentially output may indicate that an animation appearing as at least one attribute of the first image is sequentially adjusted is output as a plurality of images. For example, by adjusting the transparency or brightness of the first image, an animation in which the first image gradually disappears may be output as a plurality of images.

According to an embodiment, the fact that the plurality of first transition images, in which at least one attribute of the first image is adjusted differently, is sequentially output may indicate that a plurality of images, each generated by individually adjusting the attributes of the first image, may be output sequentially.

For example, the plurality of first transition images may include a first sub-transition image having a first transparency level (or first brightness), a second sub-transition image having a second transparency level, and a third sub-transition image having a third transparency level. For example, the first transparency level may be less than the second transparency level and the third transparency level. For example, the third transparency level may be greater than the first transparency level and the second transparency level. The first transparency level may correspond to the lowest transparency (e.g., 0% transparency), and the third transparency level may correspond to the highest transparency (e.g., 100% transparency). The first sub-transition image having the first transparency level may be the same as the first image.

The electronic device may sequentially output the first sub-transition image having the first transparency level, the second sub-transition image having the second transparency level, and the third sub-transition image having the third transparency level among the plurality of first transition images. An animation effect in which the first image gradually disappears by the plurality of first transition images may be displayed.

According to an embodiment, the plurality of first transition images may be images in which at least one of the size or position of an object within the first image changes.

In operation 340, in response to the input, the electronic device may output, on the display, a second image corresponding to the second state. For example, the second image may be an image corresponding to the wallpaper image or an image generated based on the wallpaper image.

According to an embodiment, the electronic device may output the second image with adjusted transparency in an AOD state. For example, the transparency of the second image may correspond to a transparency of 60%. The electronic device may adjust the transparency of the second image based on the current state of charge (SoC) of a battery (e.g., the battery 189 of FIG. 1) of the electronic device. The lower the current SoC of the battery, the greater the transparency of the second image.

According to an embodiment, the second image output in the AOD state may be a simplified wallpaper image to reduce the battery power consumed by the display. For example, the second image may be an edge image of the wallpaper image. For example, the second image may be an image in which at least some of the attributes of the shape of the wallpaper image are restricted or omitted. For example, the second image may be an image in which the color characteristics (e.g., saturation) of the wallpaper image are altered.

According to an embodiment, when receiving an input, the electronic device may output the second image. For example, the plurality of first transition images may be output on a first layer of the display, and the second image may be output on a second layer of the display.

According to an embodiment, the electronic device may simultaneously output the first transition images and the second image on the display. For example, the electronic device may output the second image on the display while at least one of the plurality of first transition images is output. By simultaneously outputting the first transition images and the second image, a visual effect may be created in which the first image disappears and the second image appears.

According to an embodiment, the electronic device may output the plurality of first transition images and then output the second image on the display.

According to an embodiment, the electronic device may output, on the display, a graphic object for displaying information on the second image. For example, when the second state is an AOD state, the electronic device may output, on the display, at least one of a clock information object, a weather information object, a battery information object, and an alarm information object along with the second image.

According to an embodiment, the graphic object output together with the second image may be output after the first transition images are output.

According to an embodiment, when the operation state of the electronic device is the AOD state, the electronic device may be controlled by a low-power processor (e.g., the auxiliary processor 123 of FIG. 1).

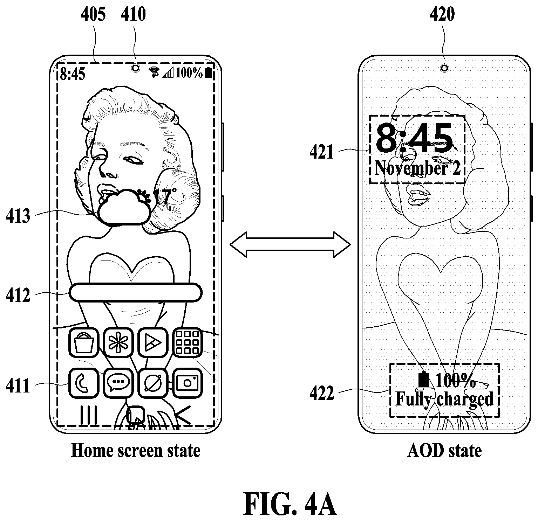

FIG. 4a illustrates a screen output in a home screen state and a screen output in an AOD state, according to an embodiment.

According to an embodiment, a screen output in a home screen state may include a wallpaper image 410, a first icon 411 corresponding to a first app, a search bar 412, and weather information 413. When receiving an input for causing a transition to an AOD state while operating in a home screen state, the electronic device may obtain a first image corresponding to a screen 405 output in the home screen state and output a plurality of first transition images based on the first image. The first image may correspond to an image or a screen of a home screen provided in the home screen state. The first image may include at least a portion of the wallpaper image 410 and an image portion corresponding to one or more icons (e.g., the first icon 411). The first image may include an image portion corresponding to the search bar 412.

When receiving an input (e.g., a mode transition input) for causing a transition from the home screen state to the AOD state, the electronic device may output a second image 420 that is preset for the AOD state. For example, the electronic device may output a plurality of second transition images as the second image 420. While operating in the AOD state, the electronic device may output the second image 420. For example, while operating in the AOD state, the electronic device may output a screen including the second image 420. The screen including the second image 420 may further include a clock information object 421 and a battery information object 422.

As a second state, the AOD state may output a second image by overlaying a digital clock image (e.g., the clock information object 421) on a modified image (e.g., the second image 420) of the wallpaper image 410. The second image may include a battery image (e.g., the battery information object 422).

According to an embodiment, the electronic device may output the plurality of first transition images on the display so as to be overlaid on the second image 420 while the second image 420 is output.

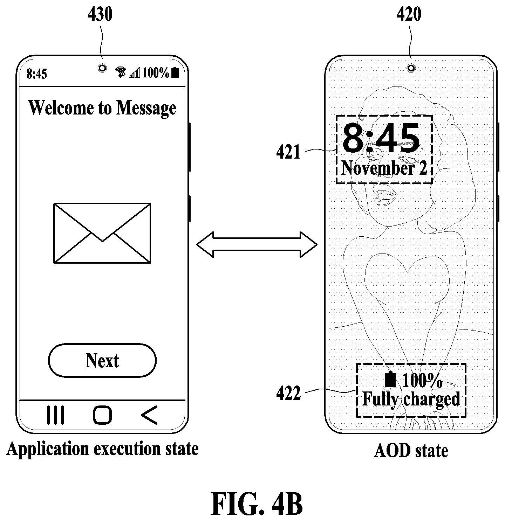

FIG. 4b illustrates a screen that is output in an application execution state and a screen that is output in an AOD state, according to an embodiment.

According to an embodiment, a screen that is output in an application execution state may include an app image 430. When receiving an input (e.g., a mode transition input) for causing a transition to an AOD state while operating in the application execution state, the electronic device may obtain a first image corresponding to a screen that is output in the application execution state and output a plurality of first transition images based on the first image. The first image may correspond to the app image 430 provided in the application execution state.

When receiving the input for causing a transition from the home screen state to the AOD state, the electronic device may output the second image 420 corresponding to the AOD state. For example, the electronic device may output a plurality of second transition images as the second image 420. While operating in the AOD state, the electronic device may output the second image 420 on a display. For example, while operating in the AOD state, the electronic device may output a screen including the second image 420. The screen including the second image 420 may further include the clock information object 421 and the battery information object 422.

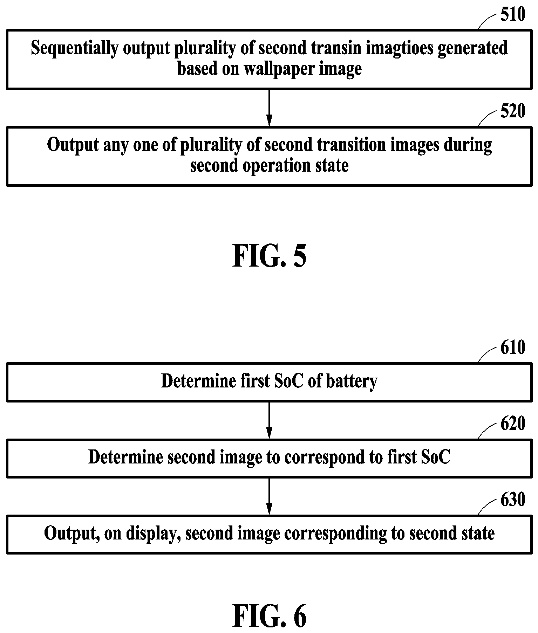

FIG. 5 is a flowchart of a method of outputting any one of a plurality of second transition images generated based on a wallpaper image during a second operation state, according to an embodiment.

According to an embodiment, operations 510 and 520 may be related to operation 340 described above with reference to FIG. 3. For example, operation 340 may include operations 510 and 520. Operations 510 and 520 may be performed by an electronic device (e.g., the electronic device 101 of FIG. 1). The electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 510, the electronic device (e.g., the electronic device 101 of FIG. 1) may sequentially output a plurality of second transition images generated based on a wallpaper image.

According to an embodiment, the fact that the plurality of second transition images generated based on the wallpaper image is sequentially output may indicate that an animation appears as at least one attribute of the wallpaper image is sequentially adjusted may be output as a plurality of images. For example, by adjusting the transparency or brightness of a second image, an animation in which the second image gradually appears may be output as the plurality of second transition images.

According to an embodiment, the fact that a plurality of first transition images, in which at least one attribute of a first image is adjusted differently, is sequentially output may indicate that a plurality of images, each generated by individually adjusting the attributes of the first image, may be output sequentially.

According to an embodiment, the electronic device may consecutively output, as the second image, the plurality of second transition images on a display. The plurality of second transition images may be generated based on the wallpaper image. For example, the plurality of second transition images may include a fourth sub-transition image having a fourth transparency level, a fifth sub-transition image having a fifth transparency level, and a sixth sub-transition image having a sixth transparency level. The fourth transparency level may correspond to the highest transparency (e.g., 100% transparency) among the transparency levels of the second transition images. The sixth transparency level may correspond to the lowest transparency (e.g., 60% transparency) among the transparency levels of the second transition images. The lowest transparency among the transparency levels of the second transition images may vary depending on the current SoC of a battery. For example, the lower the current SoC of the battery, the higher the lowest transparency value may be. As the lowest transparency value increases, the battery power consumption required to maintain the AOD state may be reduced.

The electronic device may consecutively output the fourth sub-transition image having the fourth transparency level, the fifth sub-transition image having the fifth transparency level, and the sixth sub-transition image having the sixth transparency level among the plurality of second transition images. An animation effect in which the second image gradually appears by the plurality of second transition images may be displayed.

According to an embodiment, the plurality of second transition images may be images generated by applying a preset image effect to the wallpaper image. For example, an image effect may include at least one of a grayscale effect, a one-line drawing effect, and an edge effect. Each of the plurality of second transition images generated by applying a first image effect to the wallpaper image may have a different degree of effect. For example, the later a sub-transition image is output, the stronger the effect of the first image may be applied.

According to an embodiment, the electronic device may simultaneously output the plurality of first transition images and the plurality of second transition images on the display. For example, while at least one of the plurality of first transition images is output on the display, at least one of the plurality of second transition images generated based on the wallpaper image may be sequentially output on the display as the second image. By simultaneously outputting the plurality of first transition images and the plurality of second transition images, a visual effect may be displayed in which the first image disappears and the second image appears.

According to an embodiment, after the plurality of first transition images is output, the electronic device may consecutively output the plurality of second transition images on the display.

In operation 520, while operating in the second state, the electronic device may output any one of the plurality of second transition images.

According to an embodiment, the last sub-transition image among the plurality of second transition images may be continuously output on the display while the electronic device operates in the second state.

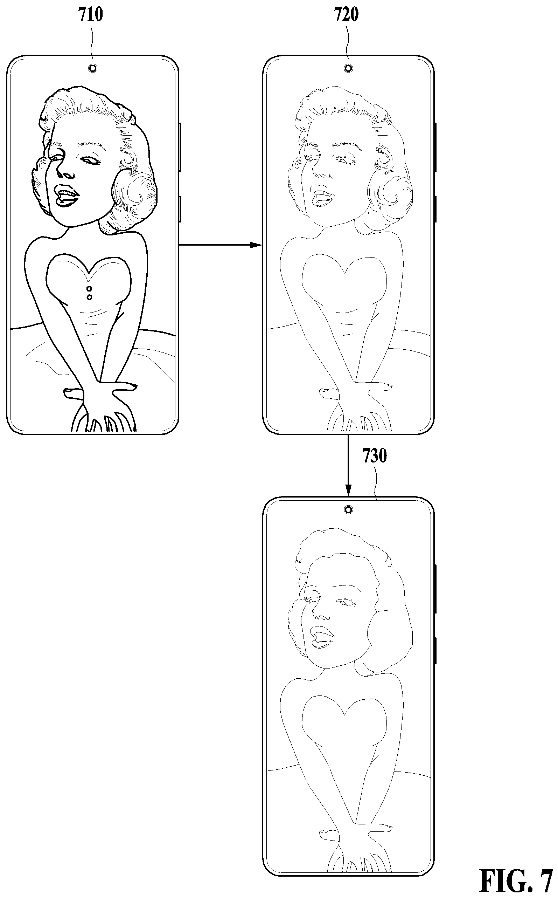

According to an embodiment, among the plurality of second transition images, a sub-transition image determined based on the current SoC of the battery may be continuously output on the display while the electronic device operates in the second state. A method of outputting any one of the plurality of second transition images based on the current SoC while the electronic device operates in the second state is described in detail below with reference to FIGS. 6 and 7.

FIG. 6 is a flowchart of a method of outputting any one of a plurality of second transition images based on a first SoC of a battery, according to an embodiment.

According to an embodiment, operations 610 to 630 may be related to operation 340 described with reference to FIG. 3 or operation 520 described with reference to FIG. 5. For example, operation 340 may include operations 610 to 630. For example, operation 520 may include operations 610 to 630. Operations 610 to 630 may be performed by an electronic device (e.g., the electronic device 101 of FIG. 1). The electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

According to an embodiment, operations 610 to 630 may be performed when the electronic device receives an input for causing a transition from a first state to a second state.

In operation 610, the electronic device may determine a first SoC of a battery (e.g., the battery 189 of FIG. 1). The first SoC may be the current SoC of the battery.

In operation 620, the electronic device may determine a second image to correspond to the first SoC. For example, the electronic device may determine any one of a plurality of second transition images corresponding to the first SoC.

In operation 630, the electronic device may output, on a display, a second image corresponding to a second state. A method of outputting any one of the plurality of second transition images corresponding to the first SoC is described in detail below with reference to FIG. 7.

FIG. 7 illustrates some of a plurality of second transition images output according to different SoCs, according to an embodiment.

For example, when a first SoC of a battery (e.g., the battery 189 of FIG. 1) of an electronic device (e.g., the electronic device 101 of FIG. 1) is within a first range (e.g., 70% to 100%), a seventh sub-transition image 710 to which an image effect is applied at 10% among a plurality of second transition images may be output.

For example, when the first SoC of the battery of the electronic device is within a second range (e.g., 50% to 70%), an eighth sub-transition image 720 to which the image effect is applied at 50% among the plurality of second transition images may be output.

For example, when the first SoC of the battery of the electronic device is within a third range (e.g., less than 50%), a ninth sub-transition image 730 to which the image effect is applied at 100% among the plurality of second transition images may be output. The stronger the image effect applied to a sub-transition image, the more simplified an object appearing within an image may be.

According to an embodiment, when the first SoC of the battery changes to a second SoC while the electronic device operates in the second state, the electronic device may change an output image to a sub-transition image corresponding to the second SoC.

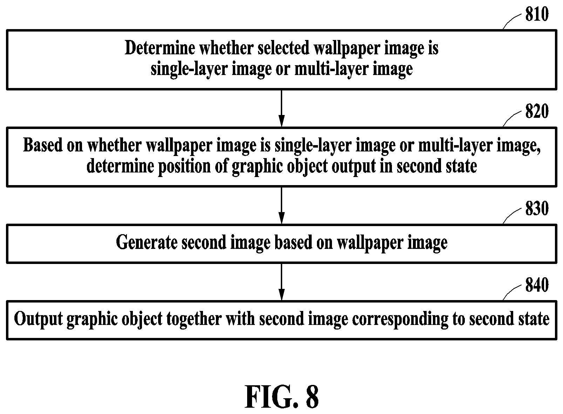

FIG. 8 is a flowchart of a method of outputting a graphic object together with a second image during a second operation state, according to an embodiment.

Operations 810 to 840 may be performed by an electronic device (e.g., the electronic device 101 of FIG. 1). The electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

According to an embodiment, operations 810 and 820 may be performed before operation 310 described above with reference to FIG. 3 is performed.

In operation 810, the electronic device may determine whether a selected wallpaper image is a single-layer image or a multi-layer image. For example, a user may select a wallpaper image to be output in a home screen state or a lock screen state from among images (e.g., photo gallery images) stored on the electronic device.

According to an embodiment, the electronic device may determine a foreground object region by detecting a foreground object within the wallpaper image. The electronic device may determine whether the wallpaper image is a single-layer image or a multi-layer image based on the size or aspect ratio of the foreground object region within the wallpaper image. For example, the electronic device may determine the wallpaper image as a single-layer image when the size of the foreground object region is greater than or equal to a first threshold value or less than or equal to a second threshold value. For example, the electronic device may determine the wallpaper image as a single-layer image when the aspect ratio of the foreground object region is greater than or equal to a third threshold value. For example, the electronic device may determine the wallpaper image as a single-layer image when the aspect ratio of the foreground object region is greater than or equal to a fourth threshold value.

In operation 820, the electronic device may determine the position of a graphic object output in a second state based on whether the wallpaper image is a single-layer image or a multi-layer image. For example, the graphic object output in the second state may include at least one of a clock graphic object, a weather graphic object, a battery graphic object, and an alarm graphic object.

For example, when the wallpaper image is a single-layer image, the position of the graphic object may be determined based on the visibility of the graphic object output together with a second image generated based on the wallpaper image.

For example, when the wallpaper image is a multi-layer image, the position of the graphic object may be determined based on that the size and position of a foreground object within the second image generated based on the wallpaper image may change.

In operation 830, the electronic device may generate the second image based on the wallpaper image. For example, the second image that is output in an AOD state may be an image in which at least one attribute of the wallpaper image is changed to reduce the power of a battery (e.g., the battery 189 of FIG. 1) consumed by the display.

According to an embodiment, at least one attribute of the wallpaper image may include at least one of transparency, color, shape, and size of the wallpaper image. For example, the second image may be an edge image of the wallpaper image. For example, the second image may be an image generated as the transparency or brightness of the wallpaper image is adjusted.

According to an embodiment, at least one attribute of the wallpaper image may include an attribute of an object within the wallpaper image. The attribute of the object within the wallpaper image may include at least one of the edge, color, shape, and size of the object. For example, the second image may be an image in which the attribute of the object within the wallpaper image is changed.

According to an embodiment, the second image may include a plurality of second transition images.

According to an embodiment, operation 830 may be performed before operation 310 is performed.

According to an embodiment, operation 830 may be associated with operation 340. For example, operation 340 may include operation 830. For example, operation 830 may be performed in response to the reception of an input for causing a transition from a first state to a second state.

In operation 840, the electronic device may output a graphic object together with the second image corresponding to the second state.

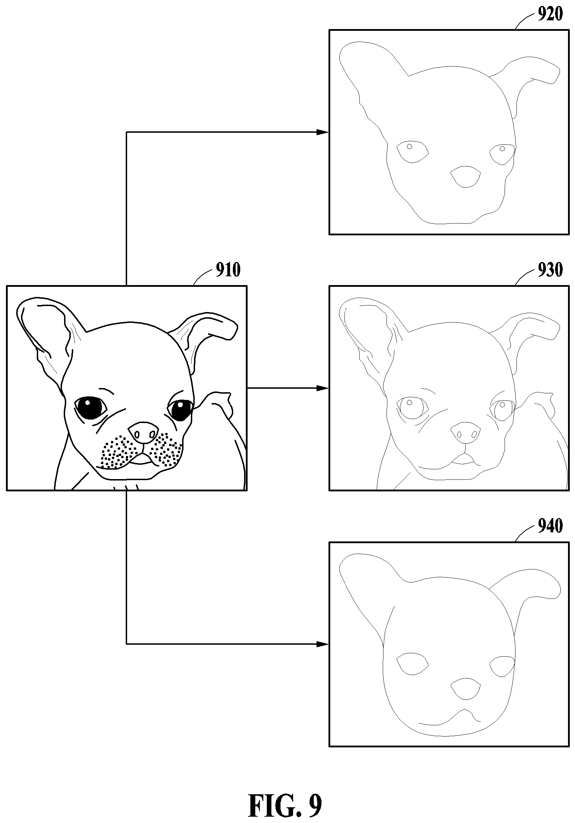

FIG. 9 illustrates an original image and images obtained by applying different image effects to the original image, according to an embodiment.

An electronic device (e.g., the electronic device 101 of FIG. 1) may generate an image 920, an image 930, and an image 940 by applying different image effects to an original image 910 (or a wallpaper image).

For example, the electronic device may generate the image 920 by applying an edge effect to the original image 910.

For example, the electronic device may generate the image 930 by applying a pen & wash effect and the edge effect together to the original image 910.

For example, the electronic device may generate the image 940 by applying a one-line drawing effect to the original image 910.

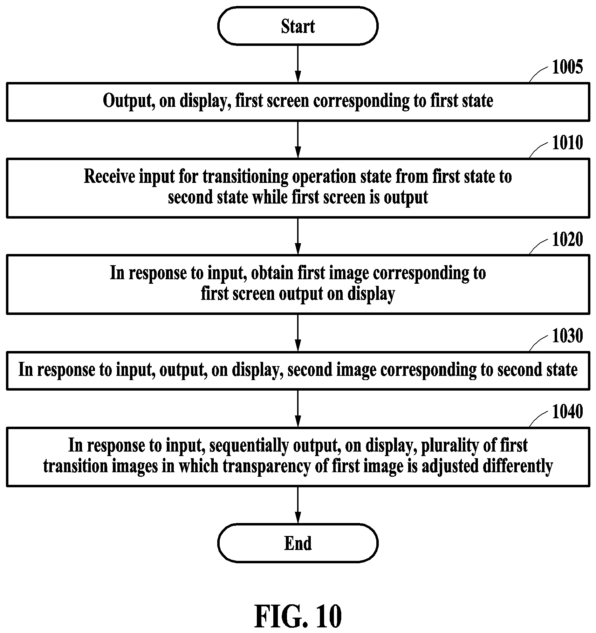

FIG. 10 is a flowchart of a method of transitioning an operation state, according to an embodiment.

Operations 1005 to 1040 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1005, the electronic device may output, on a display, a first screen (e.g., the first screen 210 or the second screen 220 of FIG. 2) corresponding to a first state. For example, the first state may be a home screen state, an application execution state, or a lock screen state. For example, a second state may be an AOD state. The description of operation 1005 may be replaced with the description of operation 305 described above with reference to FIG. 3.

In operation 1010, the electronic device may receive an input (e.g., a state transition input) for transitioning an operation state from the first state to the second state while the first screen is output. The description of operation 1010 may be replaced with the description of operation 310 described above with reference to FIG. 3.

In operation 1020, in response to the input, the electronic device may obtain a first image corresponding to the first screen output on the display. The description of operation 1020 may be replaced with the description of operation 320 described above with reference to FIG. 3.

In operation 1030, in response to the input, the electronic device may output a second image corresponding to the second state on the display. The description of operation 1030 may be replaced with the description of operation 340 described above with reference to FIG. 3.

In operation 1040, in response to the input, the electronic device may sequentially output, on the second image through the display, a plurality of first transition images in which at least one attribute of the first image is adjusted differently. For example, the plurality of first transition images may be output on a first layer of the display, and the second image may be output on a second layer of the display. The description of operation 1040 may be replaced with the description of operation 330 described above with reference to FIG. 3.

According to an embodiment, the electronic device may output the plurality of first transition images on the display so as to be overlaid on the second image while the second image is output.

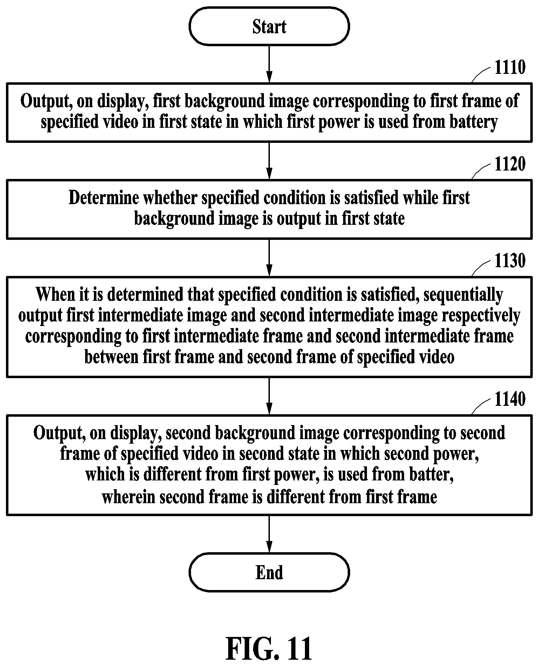

FIG. 11 is a flowchart of a method of displaying a background image according to a transition of an operation state, according to an embodiment.

Operations 1110 to 1140 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1110, the electronic device may output, on the display, a first background image (or a first wallpaper image) corresponding to a first frame of a specified video in a first state in which first power is used from a battery (e.g., the battery 189 of FIG. 1). The first background image may be an image in which at least one attribute of the first frame is changed. The first state may be any one of an AOD state, a lock screen state, and an unlock screen state. For example, the unlock screen state may include an application execution state and a home screen state.

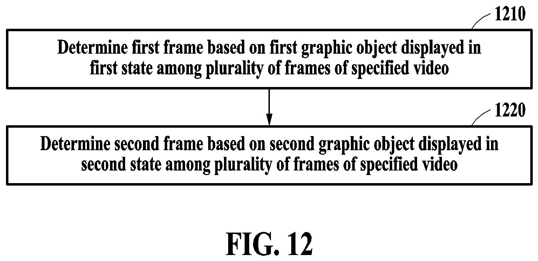

A method of determining a first frame of a specified video corresponding to a first state is described in detail below with reference to FIG. 12.

According to an embodiment, the electronic device may generate a first background image based on at least a portion of a first graphic object selected from among a plurality of first graphic objects included in the first frame.

In operation 1120, the electronic device may determine whether a specified condition is satisfied while the first background image is output in the first state.

According to an embodiment, the specified condition may be the reception of an input (e.g., a state transition input) for causing a transition from the first state to a second state. The electronic device may receive an input for causing a transition from the first state to the second state while the first background screen is output.

The electronic device may receive a state transition input from a user through an input module (e.g., the input module 150 of FIG. 1). For example, the user may transmit the state transition input to the electronic device by pressing a side button of the electronic device.

The electronic device may receive the state transition input based on a user touch drag input on the display. For example, when the first state is the lock screen state or the AOD state, the electronic device may receive the user touch drag input on the display as the state transition input.

According to an embodiment, the specified condition may be that a user input is not received for a preset period of time. When not receiving a user input for a preset period of time, the electronic device may internally generate a state transition input and receive the generated state transition input.

In operation 1130, when it is determined that the specified condition is satisfied, the electronic device may sequentially output a first intermediate image and a second intermediate image respectively corresponding to a first intermediate frame and a second intermediate frame between the first frame and the second frame of the specified video. The second frame may be a frame of the specified video set for the second state. For example, when the specified video includes frames 1 through 2500, the 25th frame is determined as the first frame for the first state, and the 461st frame is determined as the second frame for the second state, each of the 26th through 460th frames may correspond to the first intermediate frame or the second intermediate frame.

The first intermediate image may be an image obtained by changing at least one attribute of the first intermediate frame. The second intermediate image may be an image obtained by changing at least one attribute of the second intermediate image. For example, the electronic device may output the first intermediate image and the second intermediate image such that the first intermediate image has a first transparency level or a first brightness level and that the second intermediate image has a second transparency level or a second brightness level, wherein the second transparency level is different from the first transparency level and the second brightness level is different from the first brightness level. For example, the first intermediate image and the second intermediate image may be output such that the first transparency level of the first intermediate image is greater than the second transparency level of the second intermediate image.

In operation 1140, the electronic device may output a second background image corresponding to the second frame of the specified video in the second state in which second power that is different from the first power is used from the battery, wherein the second frame is different from the first frame. The second background image may be an image obtained by changing at least one attribute of the second frame. The second state may be another state that is different from the first state among the AOD state, lock screen state, and unlock screen state.

A method of determining a second frame of a specified video corresponding to a second state is described in detail below with reference to FIG. 12.

According to an embodiment, the electronic device may generate the second background image based on at least a portion of a second graphic object selected from among a plurality of second graphic objects included in the second frame. For example, the second graphic object of the second frame may correspond to the first graphic object of the first frame or may be the same as the first graphic object. For example, the second graphic object of the second frame may be a graphic object that is different from the first graphic object of the first frame.

FIG. 12 is a flowchart of a method of determining a frame corresponding to each state, according to an embodiment.

According to an embodiment, operations 1210 and 1220 may be related to operation 1110 described above with reference to FIG. 11. For example, operations 1210 and 1220 may be performed before operation 1110 is performed. Operations 1210 and 1220 may be performed by an electronic device (e.g., the electronic device 101 of FIG. 1). The electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 1210, the electronic device may determine a first frame based on a first graphic object displayed in a first state among a plurality of frames of a specified video. For example, the first graphic object output in the first state may include at least one of an app icon, a search bar, a clock graphic object, a weather graphic object, a battery graphic object, and an alarm graphic object.

According to an embodiment, based on an input for selecting one of a plurality of frames of a target video, the electronic device may determine the first frame displayed in the first state. The selection input may include a selection input by a user, a selection input generated within the electronic device, or a selection input generated outside the electronic device. For example, based on data on user behavior, the electronic device may determine, as the first frame, a frame most preferred by a user among the plurality of frames.

According to an embodiment, the electronic device may determine the first frame among the plurality of frames based on the positions or layout of one or more graphic objects displayed in the first state. For example, when the visibility of a first graphic object displayed in the first state is impaired by a foreground object or background object of a first candidate frame among the plurality of frames, the first candidate frame may not be determined as the first frame. For example, when the first state is a lock screen state, and the visibility of a clock graphic object output in the lock screen state is impaired by the foreground object of the first candidate frame, the first candidate frame may not be determined as the first frame. For example, when the color of the clock graphic object is the same as the color of the foreground object placed around the clock graphic object, the visibility of the clock graphic object may be impaired.

For example, when the first state is a lock screen state, and the visibility of the clock graphic object output in the lock screen state is impaired by the foreground object of the first candidate frame, the electronic device may change at least one attribute of an object within the first candidate frame so as to increase the visibility of the clock graphic object.

In operation 1220, the electronic device may determine a second frame based on a second graphic object displayed in a second state among the plurality of frames of the specified video. For example, the second graphic object output in the second state may include at least one of an app icon, a search bar, a clock graphic object, a weather graphic object, a battery graphic object, and an alarm graphic object.

According to an embodiment, the electronic device may determine the second frame in the second state among the plurality of frames based on the positions or layout of one or more graphic objects displayed in the second state. A description of a method of determining a second frame corresponding to a second state among a plurality of frames of a specified video is omitted below, since a description of a method of determining a first frame corresponding to a first state may be equally applied thereto.

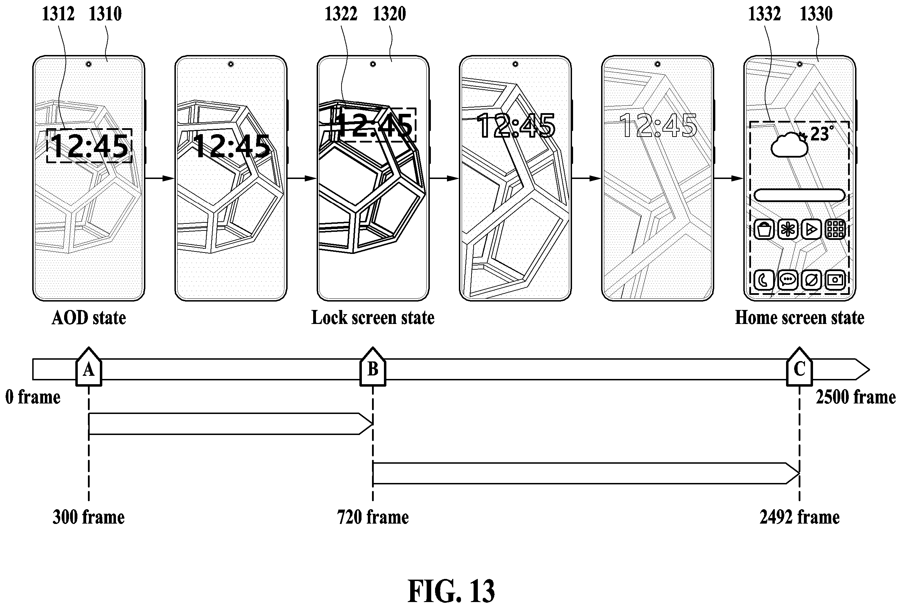

FIG. 13 illustrates a frame corresponding to an AOD state, a frame corresponding to a lock screen state, and a frame corresponding to a home screen state among a plurality of frames of a specified video, according to an embodiment.

In the description with reference to FIG. 11, the first state and the second state are described as the operation states of the electronic device, but the operation states of the electronic device may include the first state, the second state, and a third state. For example, the first state may be an AOD state, the second state may be a lock screen state, and the third state may be a home screen state.

According to an embodiment, the specified video may include a total of 2,500 frames. For example, the specified video may be a video in which the position, shape, or color of an object within the video changes frame by frame.

For example, a 300th frame of the specified video may be determined as a first frame for the AOD state, a 720th frame of the specified video may be determined as the second frame for the lock screen state, and a 2492nd frame of the specified video may be determined as the third frame for the home screen state.

In the AOD state, a 300th frame 1310 may be output as an AOD image. A graphic object 1312 for the AOD state may be output along with the 300th frame 1310. The transparency or brightness of the 300th frame 1310 may be adjusted and output.

When a state transition input is received from a user to cause a transition from the AOD state to the lock screen state, 301st to 719th frames may be output as intermediate frames. After the 719th frame is output, a 720th frame 1320 may be output. A graphic object 1322 for the lock screen state may be output along with the 720th frame 1320.

According to an embodiment, when the state transition input is based on a user touch drag input on a display, the next state of the AOD state may be determined based on the drag direction. For example, when the drag direction is to the right, the next state may be the lock screen state. For example, when the drag direction is to the left, the next state may be the home screen state.

According to an embodiment, when the state transition input is based on the user touch drag input on the display, the output speed of intermediate frames (or intermediate images corresponding to the intermediate frames) may be determined based on the drag speed. For example, in response to the state transition input, the electronic device may determine the output speed of first intermediate frames based on the state transition input. The output speed of the first intermediate frames may be determined based on the amount of coordinate change of the user touch drag input. The faster the drag speed, the quicker the changes between the intermediate frames.

When an input for causing a transition from the lock screen state to the home screen state is received from the user, 721st to 2491st frames may be output as intermediate frames. The electronic device may sequentially output the first intermediate frames on the display at the output speed. After the 2491st frame is output, a 2492nd frame 1330 may be output. A graphic object 1332 for the home screen state may be output along with the 2492nd frame 1330.

According to an embodiment, when the state transition input is a touch drag input on the display, the electronic device may determine a second state among a plurality of states based on the movement direction of the touch drag input. For example, when the movement direction of the touch drag input in the lock screen state is to the left, the second state may be the AOD state. For example, when the movement direction of the touch drag input in the lock screen state is to the right, the second state may be the home screen state.

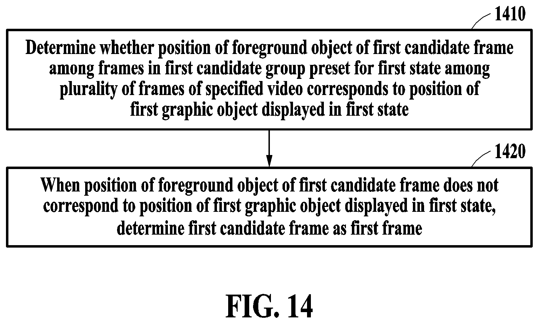

FIG. 14 is a flowchart of a method of determining a first frame based on the position of a first graphic object displayed in a first state, according to an embodiment.

According to an embodiment, operations 1410 and 1420 may be related to operation 1210 described above with reference to FIG. 12. For example, operation 1210 may include operations 1410 and 1420. Operations 1410 and 1420 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1410, the electronic device may determine whether the position of a foreground object of a first candidate frame among frames in a first candidate group preset for the first state among a plurality of frames of a specified video corresponds to the position of a first graphic object that is displayed in a first state. For example, depending on the first state, the frames in the first candidate group may be determined differently. For example, in an embodiment described with reference to FIG. 13, 1st to 500th frames of a video specified for an AOD state may be determined as a candidate group, 501st to 1700th frames of a video specified for a lock screen state may be determined as a candidate group, and 1701st to 2500th frames of a video specified for a home screen state may be determined as a candidate group.

According to an embodiment, the electronic device may determine whether the visibility of a screen layout in the first state is impaired by a foreground object of a first candidate frame among the plurality of frames of the specified video.

In operation 1420, when the position of the foreground object of the first candidate frame does not correspond to the position of the first graphic object displayed in the first state, the electronic device may determine the first candidate frame as a first frame.

According to an embodiment, the electronic device may determine whether the visibility of the first graphic object is impaired by the foreground object when the position of the foreground object of the first candidate frame corresponds to the position of the first graphic object displayed in the first state. When the visibility of the first graphic object is not impaired by the foreground object, the first candidate frame may be determined as the first frame. For example, when the color of the first graphic object is the same as the color of the foreground object placed around the first graphic object, the visibility of the first graphic object may be impaired.

According to an embodiment, the electronic device may change the color of the first graphic object to increase the visibility of the first graphic object. The color of the first graphic object may be changed to a color that contrasts with the color of the foreground object placed around the first graphic object.

According to an embodiment, the electronic device may change the position of the first graphic object to increase the visibility of the first graphic object.

According to an embodiment, the electronic device may determine the first candidate frame as the first frame when the visibility of a screen layout in the first state is not impaired by the foreground object of the first candidate frame among the frames in the first candidate group preset for the first state among the plurality of frames of the specified video.

According to an embodiment, the electronic device may not determine the first candidate frame as the first frame when the first candidate frame is not clear.

According to an embodiment, by analyzing the plurality of frames of the specified video, the electronic device may determine the position and color of each graphic object output in the first state with increased visibility and determine the first frame corresponding to the first state.

A second frame corresponding to a second state may be determined using a method similar to the method of determining the first frame corresponding to the first state. Additionally, a third frame corresponding to a third state may be further determined using a method similar to the method of determining the first frame corresponding to the first state.

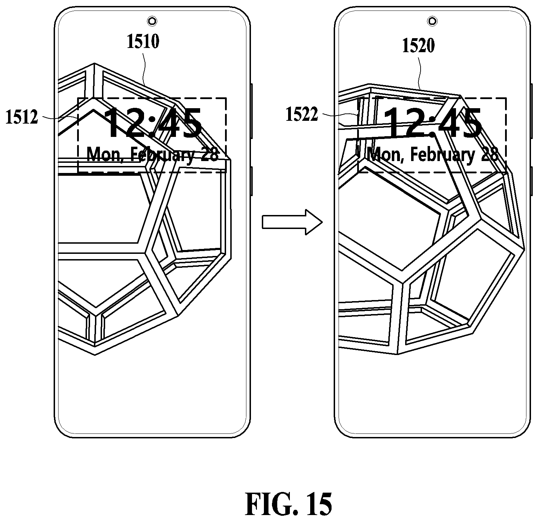

FIG. 15 illustrates a method of determining a first frame based on the position of a first graphic object displayed in a first state, according to an embodiment.

Visibility within a first graphic object 1512 may be impaired by a foreground object of a first candidate frame 1510 placed around the first graphic object 1512 output in a first state. Compared to the visibility for the first candidate frame 1510, the visibility of a first graphic object 1522 by a foreground object of a second candidate frame 1520 placed around the first graphic object 1522 may be better. Accordingly, among the first candidate frame 1510 and the second candidate frame 1520, the second candidate frame 1520 may be determined as a first frame corresponding to a first state.

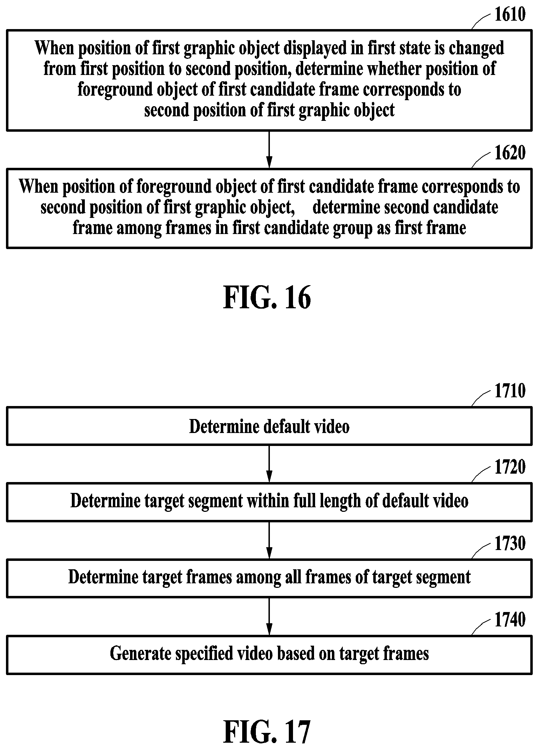

FIG. 16 is a flowchart of a method of determining a first frame based on the position of a first graphic object displayed in a first state, according to an embodiment.

According to an embodiment, operations 1610 and 1620 below may be performed after operation 1420 described above with reference to FIG. 14 is performed. Operations 1610 and 1620 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1610, when the position of a first graphic object displayed in a first state is changed from a first position to a second position, the electronic device may determine whether the position of a foreground object of a first candidate frame corresponds to the second position of the first graphic object.

When the visibility of the first graphic object is impaired as the position of the foreground object of the first candidate frame corresponds to the second position of the first graphic object, operation 1620 may be performed.

In operation 1620, when the position of the foreground object of the first candidate frame corresponds to the second position of the first graphic object, the electronic device may redetermine a second candidate frame among frames in a first candidate group as the first frame. For example, the second candidate frame may be a candidate frame in which the position of the foreground object of the second candidate frame does not correspond to the second position of the first graphic object displayed in the first state. For example, the second candidate frame may be a candidate frame in which the visibility of the first graphic object is not impaired even if the position of the foreground object of the second candidate frame corresponds to the second position of the first graphic object displayed in the first state.

FIG. 17 is a flowchart of a method of generating a specified video based on a default video, according to an embodiment.

According to an embodiment, operations 1710 and 1740 may be related to operation 1110 described above with reference to FIG. 11. For example, operations 1710 to 1740 may be performed before operation 1110 is performed. Operations 1710 to 1740 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1710, the electronic device may determine a default model. The default video may be a video selected by a user. For example, among a plurality of videos (e.g., photo gallery videos) stored in the memory of the electronic device, a video selected by the user may be determined as the default video. For example, among a plurality of videos stored in an external electronic device (e.g., the electronic device 104 of FIG. 1) or a server (e.g., the server 108 of FIG. 1) that is directly or indirectly connected to the electronic device through a network, a video selected by the user may be determined as the default video.

In operation 1720, the electronic device may determine a target segment within the full length of the default video.

According to an embodiment, when the total number of frames of the default video is greater than or equal to a preset number (e.g., 2,500), a portion of the full length of the default video may be determined as the target segment. For example, the electronic device may display the full length of the default video in the form of a slide bar, and the user may select the target segment using the slide bar. The target segment may be selected from the full length of the default video based on a selection input of the user. The target segment may be determined such that the number of frames included in the target segment is a preset number. Although the example of the preset number provided here is 2,500, the preset number may vary according to an embodiment.

According to an embodiment, the target segment may be determined from the full length of the default video based on a user selection of an arbitrary segment. For example, even when the number of frames in the target segment is greater than or equal to the preset number (e.g., 2,500), the target segment corresponding to a segment selected by the user may be determined from the full length of the default video.

When the total number of frames included in the determined target segment is greater than or equal to the preset number, operation 1730 may be performed further.

In operation 1730, the electronic device may determine target frames among all frames of the target segment. For example, the electronic device may determine the target frames by sampling all frames of the target segment at a preset ratio. For example, when the total number of frames in the target segment is 5,000, 2,500 target frames may be determined by sampling all frames at a ratio of 1/2.

In operation 1740, the electronic device may generate a specified video based on the target frames. For example, a video specified to include the target frames may be generated.

According to an embodiment, operations 1210 and 1220 of FIG. 12 are performed on the generated specified video so that a first frame corresponding to a first state may be determined and a second frame corresponding to a second state may be determined. Thereafter, operation 1110 of FIG. 11 is performed so that a first background image corresponding to the first frame may be output in the first state.

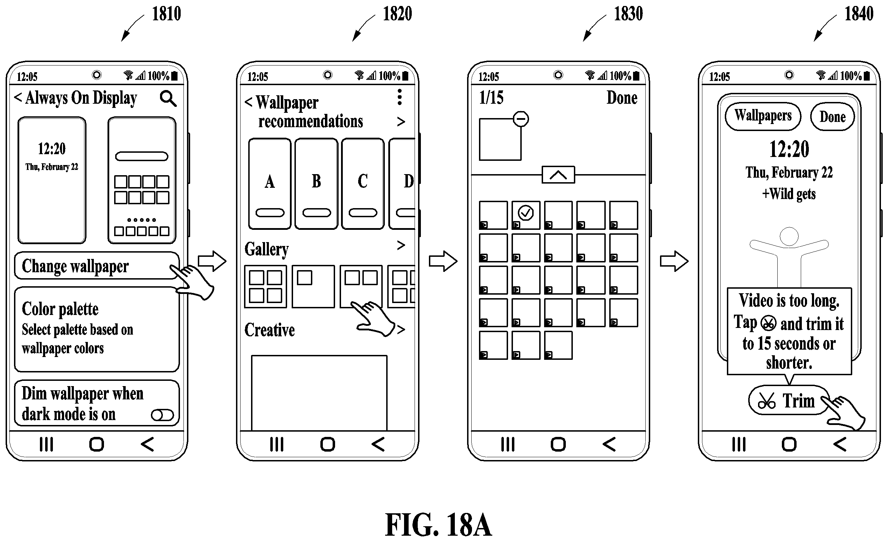

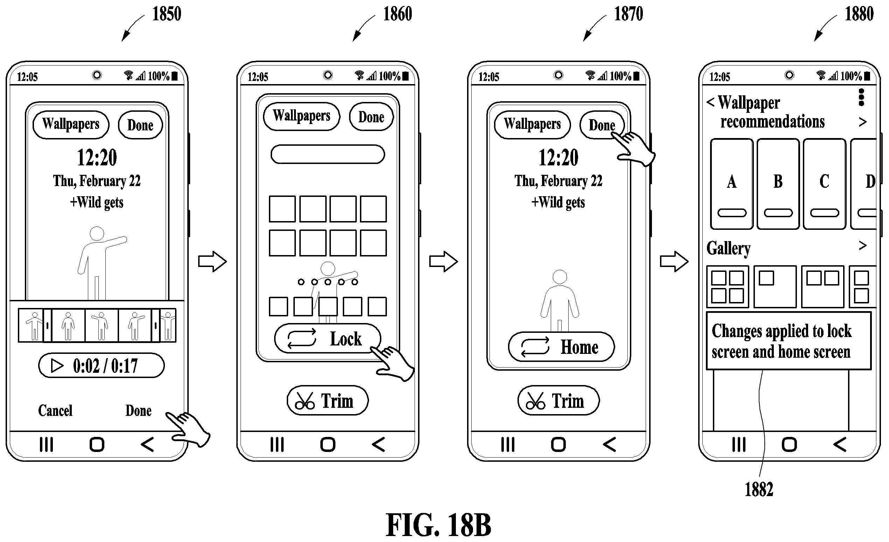

FIGS. 18a and 18b illustrate screens of a method of generating a target video based on a default video, according to an embodiment.

Screens 1810 to 1880 may be output on a display (e.g., the display module 160 of FIG. 1) of an electronic device (e.g., the electronic device 101 of FIG. 1).

The screen 1810 may include an option for changing a wallpaper image (or a background image) output in an AOD state. A user may select an option (e.g., touch or click) for changing the wallpaper image.

The screen 1820 may be output in response to a user selection to change the wallpaper image. The screen 1820 may include options for identifying the format of the wallpaper image output in the AOD state. For example, the format of the wallpaper image may be a still image format or a video format stored in the electronic device (e.g., a photo gallery). The user may select an option corresponding to a desired format among wallpaper image formats. For example, the user may select an option corresponding to the video format.

The screen 1830 may be output in response to a user selection for the format of the wallpaper image. For example, when the video format is selected, the screen 1830 may output a list of videos stored in the electronic device. For example, the list may be output based on the thumbnails of the videos. The user may select any one of the videos appearing in the list as a default video.

The screen 1840 may be output in response to the default video being selected. For example, the screen 1840 may include a preview screen for the AOD state. The preview screen may be output based on the frames of the default video.

According to an embodiment, when the total number of frames of the default video exceeds a preset number (e.g., 2,500), an option for adjusting the total number of frames to the preset number may be added to the screen 1840. The option for adjusting the total number of frames to the preset number or less may be "Trim." When the total number of frames of the default video is less than or equal to the preset number, the option for adjusting the total number of frames to the preset number or less may not be output on the screen 1840.

According to an embodiment, when the total duration of the default video exceeds a preset time (e.g., 15 seconds), an option for adjusting the total duration of the default video to the preset time may be added to the screen 1840. The option for adjusting the total duration of the default video to a preset time or less may be "Trim." When the total duration of the default video is less than or equal to the preset time, the option for adjusting the duration of the default video to the preset time or less may not be output on the screen 1840.

The screen 1850 may be output in response to the selection of an option for adjusting the number of frames or the duration of the default video. For example, the screen 1850 may display the default video in the form of a slide bar corresponding to the total duration of the default video. The slide bar may output a predetermined frame corresponding to a predetermined time. The user may select a desired time (e.g., a target segment) from the total duration using the slider bar. An example in which the time from 2 to 17 seconds is selected as a target segment is shown on the screen 1850.

Although an embodiment in which the total duration of the default video is adjusted is described with reference to the screen 1850, the above description may be similarly applicable to an embodiment in which all frames of the default video are adjusted. When the duration or the number of frames of the default video is adjusted, the result may be stored as a target video.

When the target video is generated, the screen 1860 or the screen 1870 may be output. The screen 1860 may include a preview of a screen output in a home screen state. The screen output in the home screen state may include at least a portion of a first wallpaper image corresponding to a first frame of the target video. For example, the first wallpaper image may be the same as the image of the first frame. For example, the first wallpaper image may be an image in which at least one attribute (e.g., transparency, color, shape, size, selection of a predetermined object, or some attributes of a predetermined object (e.g., an edge of a predetermined object)) of the first frame is adjusted.

According to an embodiment, the first frame corresponding to the home screen state may be selected by the user.

According to an embodiment, the first frame corresponding to the home screen state may be selected by the electronic device. For example, the electronic device may determine the first frame among the plurality of frames based on the positions or layout of one or more graphic objects displayed in the home screen state.

The screen 1860 may include an option (e.g., "Lock" option) that provides a preview of a screen output in a lock screen state.

The screen 1870 may include a preview of the screen output in the lock screen state. The screen output in the lock screen state may include at least a portion of a second wallpaper image corresponding to a second frame of the target video. For example, the second wallpaper image may be the same as the image of the second frame. For example, the second wallpaper image may be an image in which at least one attribute (e.g., transparency, color, shape, size, selection of a predetermined object, or some attributes of a predetermined object (e.g., the edge of a predetermined object)) of the second frame is adjusted.

According to an embodiment, the second frame corresponding to the lock screen state may be selected by the user.

According to an embodiment, the second frame corresponding to the lock screen state may be selected by the electronic device. For example, the electronic device may determine the second frame among the plurality of frames based on the positions or layout of one or more graphic objects displayed in the lock screen state.

The screen 1870 may include an option (e.g., "Home" option) that provides a preview of a screen output in the home screen state. When the "Home" option is selected, the screen 1860 may be output.

The method of setting a first wallpaper image corresponding to a home screen state and a second wallpaper image corresponding to a lock screen state is described with reference to the screen 1860 and the screen 1870. This description may be similarly applicable to a description of a method of setting a third wallpaper image corresponding to an AOD state.

When the settings for the first wallpaper image corresponding to the home screen state and the second wallpaper image corresponding to the lock screen state are completed using the target video, the screen 1880 may be output. The screen 1880 may display text 1882 indicating that the first wallpaper image corresponding to the home screen state and the second wallpaper image corresponding to the lock screen state are changed.

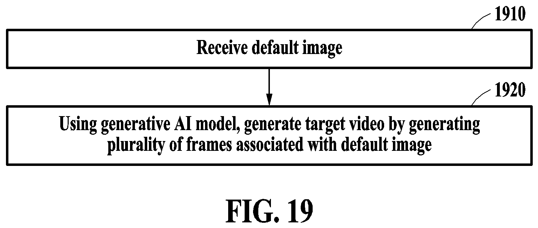

FIG. 19 is a flowchart of a method of generating a specified video based on a default image, according to an embodiment.

According to an embodiment, operations 1910 and 1920 may be performed before operation 1110 described above with reference to FIG. 11 is performed. Operations 1910 and 1920 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 1910, the electronic device may receive a default image. For example, the electronic device may receive a default image in response to a user input selecting one of the images stored in the electronic device.

In operation 1920, using a generative AI model, the electronic device may generate a video by generating a plurality of frames associated with the default image. For example, when a foreground object is included within the default image, the plurality of frames may be generated such that the position, shape, or color of the foreground object is changed.

According to an embodiment, the plurality of frames may be generated so that the video has 120 frames per second (fps). The number of frames included in the video is not limited to the described embodiment and may vary depending on the embodiment. The video may be generated so that the total duration of the video corresponds to a preset time, or the total number of frames corresponds to a preset number.

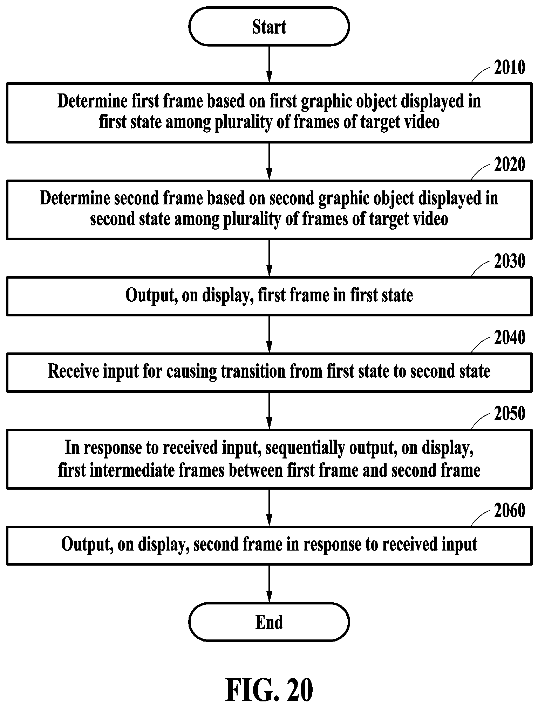

FIG. 20 is a flowchart of a method of transitioning an operation state, according to an embodiment.

Operations 2010 to 2060 may be performed by an electronic device (e.g., the electronic device 101 of FIG. 1). For example, the electronic device may include a processor (e.g., the processor 120 of FIG. 1), memory (e.g., the memory 130 of FIG. 1), and a display (e.g., the display module 160 of FIG. 1).

In operation 2010, the electronic device may determine a first frame based on a first graphic object displayed in a first state among a plurality of frames of a target video (or a specified video). According to an embodiment, based on an input of selecting one of a plurality of frames of a target video, the electronic device may determine a first frame displayed in a first state. The input may include a selection input by a user or a selection input generated within or outside the electronic device. For example, the electronic device may replace a selection made by the user by utilizing data on user behavior to predict user preferences and determining the first frame based on the predicted preferences. For example, the first state may be a home screen state, a lock screen state, or an AOD state.

According to an embodiment, the electronic device may determine the first frame among the plurality of frames based on the positions or layout of one or more graphic objects displayed in the first state. For example, when the visibility of a first graphic object displayed in the first state is impaired by a foreground object or background object of a first candidate frame among the plurality of frames, the first candidate frame may not be determined as the first frame. For example, when the first state is a lock screen state, and the visibility of a clock graphic object output in the lock screen state is impaired by the foreground object of the first candidate frame, the first candidate frame may not be determined as the first frame. For example, when the color of the clock graphic object is the same as the color of the foreground object placed around the clock graphic object, the visibility of the clock graphic object may be impaired. For example, when the first state is the lock screen state and the visibility of the clock graphic object output in the lock screen state is impaired by the foreground object of the first candidate frame, at least some of the attributes of the object included in the first candidate frame may be changed, and the first candidate frame in which at least some of the attributes of the object are changed may be determined as the first frame.

In operation 2020, the electronic device may determine a second frame based on a second graphic object displayed in a second state among a plurality of frames of a target video. According to an embodiment, based on an input of selecting one of a plurality of frames of the target video, the electronic device may determine the second frame displayed in the second state. The input may include a user selection input or a selection input generated within or outside the electronic device. For example, the electronic device may replace a selection made by the user by utilizing data on user behavior to predict user preferences and determining the second frame based on the predicted preferences. For example, the second state may be the home screen state, the lock screen state, or the AOD state, and may be a state that is different from the first state.

According to an embodiment, the electronic device may determine the second frame among the plurality of frames based on the positions or layout of one or more graphic objects displayed in the second state. The description of operation 2010 may similarly apply to the description of operation 2020.

In operation 2030, the electronic device may output a first frame on the display in the first state and output a first wallpaper image generated based on the first frame. For example, when the first state is the home screen state or the lock screen state, the first frame may correspond to a wallpaper image. For example, when the first state is the lock screen state, the first frame may correspond to a lock screen image.

In operation 2040, the electronic device may receive an input (e.g., a state transition input) for causing a transition from the first state to the second state. For example, the electronic device may receive an input for causing a transition from the first state to the second state while the first frame is output.

According to an embodiment, the electronic device may receive the state transition input from the user through an input module (e.g., the input module 150 of FIG. 1). For example, the user may transmit the state transition input to the electronic device by pressing a side button of the electronic device.

According to an embodiment, the electronic device may internally generate a state transition input when no user input is received for a preset time and may receive the generated state transition input.

According to an embodiment, the electronic device may receive the state transition input based on a user touch drag input on the display. For example, when the first state is the lock screen state or the AOD state, the user may receive the state transition input by touching and dragging the screen.

According to an embodiment, the electronic device may transition the operation state from the first state to the second state at the time when the state transition input is received.

In operation 2050, the electronic device may sequentially output, on the display, first intermediate frames between the first frame and the second frame in response to an input for causing a transition from the first state to the second state. For example, when the target video includes frames 1 through 500, a 25th frame is determined as the first frame corresponding to the first state, and a 461th frame is determined as the second frame corresponding to the second state, 26th through 460th frames may be sequentially output on the display as first intermediate frames.

In operation 2060, in response to an input, the electronic device may output, on the display, the second frame or a first wallpaper image generated based on the second frame. In the example described above, the electronic device may output the 461th frame as the second frame in the second state. While operating in the second state, the electronic device may output a graphic object corresponding to the second state together with the second frame.

According to an embodiment, when the second state is the AOD state, the electronic device may adjust the transparency or brightness of the second frame and output the adjusted second frame. For example, transparency or brightness may vary depending on a first SoC of a battery.

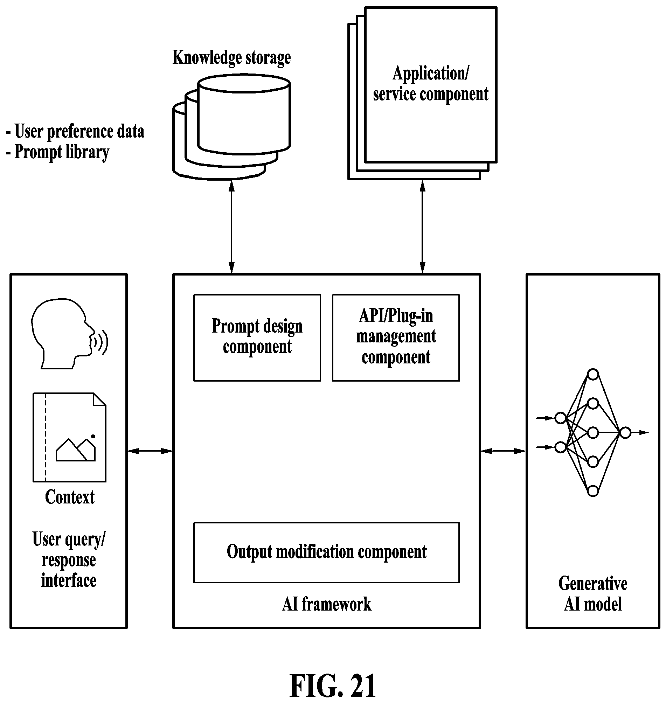

FIG. 21 illustrates a generative AI system according to an embodiment.

A user query/response interface may receive a user input. The user input may be in the form of natural language, images, and/or videos. In addition, when the user input is transmitted, context information may be transmitted together. The context information may include various types of additional information at the time when the user input is entered. For example, the additional information may include information regarding an application a user is currently using or information regarding the location of the user. In addition, the user input may be in a form that integrates natural language, image, sound, and context information described above. In addition, the user input may also be in a non-natural language form, for example, by choosing a menu. The user query/response interface may output a result of a generative AI system to a user. The output may be in the form of natural language or predetermined content. The output may also be provided in the form of an action requested by the user. The user query interface may output a result of the generative AI system to the user. The output may be in the form of natural language or predetermined content. The output may also be provided in the form of an action requested by the user.

An AI framework may receive the user input and adjust and control each component necessary to execute user intent based on a user query.

The user input received from the user query/response interface may be transmitted to a prompt design component. The prompt design component may be used to generate a prompt suitable for entering a user input into a large language model (LLM) or large multimodal model (LMM). The prompt design component may be an AI component that uses a machine learning algorithm or a neural network to develop better prompts over time. The prompt design component may generate, based on the user input, a prompt by accessing a knowledge component including user preference data, a prompt library, and prompt examples and may transmit the generated prompt to an LLM or LMM.

An application programming interface (API)/Plug-in management component may perform the role of communicating with external information when there is a request for additional information while a user input is transmitted as an input to a generative model. The API/Plug-in management component may establish a channel for communication with the outside of an AI interface via an API and may enable access to various data sources through the established channel. Additionally, when an action that finally executes a user input, instead of an intermediate result, has to be performed by an application or service, the API/Plug-in management component may request the action through an API. Information obtained from outside may be used to generate a prompt in the prompt design component along with a user input or may be transmitted as an input to a generative model.

A refiner component may finely tune a result output from a generative model. For example, the refiner component may verify whether content generated through an LLM and/or LMM is irrelevant, includes biased content, or includes harmful content. In addition, the refiner component may determine the extent to which the content matches a result desired by a user, and if additional processing is required, the refiner component may proceed with that process. The refiner component may generate and provide a hint to the user to avoid an additional unwanted output.

In general, a generative AI model may be an AI neural network that generates new forms of data based on user input information. A generative AI model may include a model that generates images and/or a model that generates language. A representative image generation model may include a generative adversarial network (GAN) and a variational autoencoder (VAE), and examples may include a diffusion-based generative model using a VAE and a transformer structure. A language generation model may be trained to output the most statistically appropriate output value based on input values, and representative examples may include a model such as ChatGPT-3 and ChatGPT-4. There are also LMMs that may recognize various forms of data input, such as text, images, and voice, and may generate new data corresponding to the various forms of data input.

According to an embodiment, an electronic device 101 may include a display 160, at least one processor 120, and memory 130 storing instructions, wherein the instructions, when executed by the at least one processor 120 individually or collectively, may cause the electronic device 101 to receive an input for causing a transition from a first state to a second state while a first screen is output, in response to the input, obtain a first image corresponding to the first screen that is output on the display 160, sequentially output, on the display 160, a plurality of first transition images in which transparency of the first image is differently adjusted, and output, on the display 160, a second image corresponding to the second state.

According to an embodiment, the first state may correspond to a home screen state in which one or more icons are displayed on a wallpaper image, the first image may correspond to a home screen image provided in the home screen state, the first image may include at least a portion of the wallpaper image and an image portion corresponding to the one or more icons, and the second state may correspond to an AOD state in which a digital clock image is overlaid on a modified image of the wallpaper image and the second image is output.

According to one embodiment, the first state corresponds to an application execution state in which a screen for an app is displayed, the first image corresponds to an app image provided in the application execution state, and the second state corresponds to an AOD state in which a second image is output by overlaying a digital clock image on a modified image of a wallpaper image.

According to an embodiment, the first state may correspond to a lock screen state in which a digital clock is displayed on the wallpaper image, the first image may correspond to a lock screen image provided in a lock screen state, the first image may include an image portion corresponding to at least a portion of the wallpaper image and the digital clock, and the second state may correspond to an AOD state in which a digital clock image is overlaid on a modified image of the wallpaper image and the second image is output.

According to an embodiment, when executed by the at least one processor 120 individually or collectively, the instructions may cause the electronic device 101 to output a first sub-transition image having a first transparency level among the plurality of first transition images, output a second sub-transition image having a second transparency level among the plurality of first transition images, and output a third sub-transition image having a third transparency level among the plurality of first transition images.

According to an embodiment, the first transparency level may be less than the second transparency level and the third transparency level, and the third transparency level may be greater than the first transparency level and the second transparency level.

According to an embodiment, when executed by the at least one processor 120 individually or collectively, the instructions may cause the electronic device 101 to output the second image on the display 160 while at least one of the plurality of first transition images is output.

According to an embodiment, when executed by the at least one processor 120 individually or collectively, the instructions may cause the electronic device 101 to sequentially output, as the second image, at least one of a plurality of second transition images on the display 160 while at least one of the plurality of first transition images is output, wherein the plurality of second transition images is generated based on a wallpaper image.

According to an embodiment, when executed by the at least one processor 120 individually or collectively, the instructions may cause the electronic device 101 to output the second image on the display 160 after the plurality of first transition images is output.

According to an embodiment, when executed by the at least one processor 120 individually or collectively, the instructions may cause the electronic device 101 to sequentially output, as the second image, a plurality of second transition images on the display 160 after the plurality of first transition images is output, wherein the plurality of second transition images is generated based on a wallpaper image.

According to an embodiment, the plurality of second transition images may be images generated by applying a preset image effect to the wallpaper image.

According to an embodiment, when executed by the at least one processor 120 individually or collectively, the instructions may cause the electronic device 101 to output, on the display 160, the plurality of first transition images so as to be overlaid on the second image while the second image is output.

According to an embodiment, when executed by the at least one processor 120 individually or collectively, the instructions may cause the electronic device 101 to, in response to the input, determine a first SoC of a battery 189 of the electronic device 101, determine the second image corresponding to the first SoC, and output, on the display 160, the second image corresponding to the second state.

According to an embodiment, when executed by the at least one processor 120 individually or collectively, the instructions may cause the electronic device 101 to determine whether a selected wallpaper image is a single-layer image or a multi-layer image, based on whether the wallpaper image is the single-layer image or the multi-layer image, determine a position of a graphic object that is output in the second state, generate the second image based on the wallpaper image, and in response to the input, output the graphic object together with the second image corresponding to the second state.

According to an embodiment, a method of transitioning an operation state of an electronic device 101 may include outputting 305, on a display 160 of the electronic device 101, a first screen corresponding to a first state, while the first screen is output, receiving 310 an input for causing a transition from the first state to a second state, in response to the input, obtaining 320 a first image corresponding to the first screen output on the display 160, sequentially outputting 330, on the display 160, a plurality of first transition images in which transparency of the first image is differently adjusted, and outputting 340, on the display 160, a second image corresponding to the second state.

According to an embodiment, an electronic device 101 may include a battery 189, a display 160, at least one processor 120, and memory 130 storing instructions, wherein the instructions, when executed by the at least one processor 120 individually or collectively, may cause the electronic device 101 to, in a first state in which first power is used from the battery 189, output, on the display 160, a first background image corresponding to a first frame of a specified video, determine whether a specified condition is satisfied while the first background image is output in the first state, when it is determined that the specified condition is satisfied, sequentially output a first intermediate image and a second intermediate image respectively corresponding to a first intermediate frame and a second intermediate frame between the first frame and a second frame of the specified video, and in a second state in which second power that is different from the first power is used from the battery 189, output, on the display 160, a second background image corresponding to the second frame of the specified video, wherein the second frame is different from the first frame.

According to an embodiment, the first state may be any one of an AOD state, a lock screen state, and an unlock screen state, and the second state may be another state, different from the first state, selected from the AOD state, the lock screen state, and the unlock screen state.

According to an embodiment, when executed by the at least one processor 120 individually or collectively, the instructions may cause the electronic device 101 to output a first intermediate image and a second intermediate image such that the first intermediate image has a first transparency level or a first brightness level and the second intermediate image has a second transparency level that is different from the first transparency level or a second brightness level that is different from the first brightness level.

According to an embodiment, when executed by the at least one processor 120 individually or collectively, the instructions may cause the electronic device 101 to output the first intermediate image and the second intermediate image such that the first transparency level of the first intermediate image is greater than the second transparency level of the second intermediate image.

According to an embodiment, when executed by the at least one processor 120 individually or collectively, the instructions may cause the electronic device 101 to generate the first background image based on at least a portion of a selected first graphic object among a plurality of first graphic objects included in the first frame and generate the second background image based on at least a portion of a selected second graphic object among a plurality of second graphic objects included in the second frame.

According to an embodiment, when executed by the at least one processor 120 individually or collectively, the instructions may cause the electronic device 101 to select the first graphic object and the second graphic object to correspond to a same object.

According to an embodiment, when executed by the at least one processor 120 individually or collectively, the instructions may cause the electronic device 101 to select the first graphic object and the second graphic object such that at least a portion of the second graphic object differs from the first graphic object.

According to an embodiment, when executed by the at least one processor 120 individually or collectively, the instructions may cause the electronic device 101 to determine whether the position of a foreground object of a first candidate frame corresponds to a second position of the first graphic object when the position of the first graphic object output in a first mode is changed from a first position to the second position and determine, as a first frame, a second candidate frame among frames in a first candidate group when the position of the foreground object of the first candidate frame corresponds to the second position of the first graphic object.

According to an embodiment, when executed by the at least one processor 120 individually or collectively, the instructions may cause the electronic device 101 to generate a specified video based on a default image.

According to an embodiment, when executed by the at least one processor 120 individually or collectively, the instructions may cause the electronic device 101 to generate the specified video based on the default image using a generative AI model.

According to an embodiment, when executed by the at least one processor 120 individually or collectively, the instructions may cause the electronic device 101 to generate the specified video such that the position of a graphic object of the first frame, the position of a graphic object of the first intermediate frame, the position of a graphic object the second intermediate frame, and the position of a graphic object of the second frame are different from one another, wherein the graphic object of the first frame, the graphic object of the first intermediate frame, the graphic object of the second intermediate frame, and the graphic object of the second frame correspond to graphic objects of the default image.

According to an embodiment, an electronic device 101 may include a display 160, at least one processor 120, and memory 130 storing instructions, wherein when executed by the at least one processor 120 individually or collectively, the instructions may cause the electronic device 101 to determine, among a plurality of frames of a target video, a first frame based on a first graphic object that is displayed in a first state, determine, among the plurality of frames of the target video, a second frame based on a second graphic object that is displayed in a second state, output the first frame on the display 160 in the first state, receive an input for causing a transition from the first state to the second state while the first frame is output, in response to the input, sequentially output, on the display 160, first intermediate frames between the first frame and the second frame, and output the second frame on the display 160.

According to an embodiment, when executed by the at least one processor 120 individually or collectively, the instructions may cause the electronic device 101 to determine whether the position of a foreground object of a first candidate frame among frames of a first candidate group set for the first state among the plurality of frames of the target video corresponds to the position of a first graphic object that is displayed in the first state and determine the first candidate frame as the first frame when the position of the foreground object of the first candidate frame does not correspond to the position of the first graphic object.

According to an embodiment, when executed by the at least one processor 120 individually or collectively, the instructions may cause the electronic device 101 to determine whether the position of the foreground object of the first candidate frame corresponds to a second position of the first graphic object when the position of the first graphic object that is displayed in the first state is changed from the first position to the second position and determine a second candidate frame among the frames in the first candidate group as the first frame when the position of the foreground object of the first candidate frame corresponds to the second position of the first graphic object.

According to an embodiment, when the first state is a home screen state, a first image may be output as a wallpaper image in the home screen state.

According to an embodiment, when executed by the at least one processor 120 individually or collectively, the instructions may cause the electronic device 101 to output the second frame by adjusting the transparency or brightness of the second frame when the second state is an AOD state.

According to an embodiment, when executed by the at least one processor 120 individually or collectively, the instructions may cause the electronic device 101 to generate a target video by generating a plurality of frames associated with a default image using a generative AI model.

According to an embodiment, when executed by the at least one processor 120 individually or collectively, the instructions may cause the electronic device 101 to generate, based on the default image, a plurality of frames such that the position of a foreground object of the default image changes.

According to an embodiment, when executed by the at least one processor 120 individually or collectively, the instructions may cause the electronic device 101 to determine an output speed of first intermediate frames based on the input and sequentially output the first intermediate frames at the output speed on the display 160.

According to an embodiment, the input may be a touch drag input on a display, and the output speed may be determined based on the amount of coordinate change of the touch drag input.

According to an embodiment, when executed by the at least one processor 120 individually or collectively, the instructions may cause the electronic device 101 to determine an output speed of first intermediate frames based on the input and sequentially output the first intermediate frames at the output speed on the display 160.

According to an embodiment, the input may be a touch drag input on a display, and the output speed may be determined based on the amount of coordinate change of the touch drag input.

According to an embodiment, when executed by the at least one processor 120 individually or collectively, the instructions may cause the electronic device 101 to, in response to the input, determine a second state among a plurality of states based on the movement direction of the touch drag input when the input is the touch drag input on the display.

The embodiments described herein may be implemented using a hardware component, a software component, and/or a combination thereof. For example, the device, the method, and the components described in the embodiments may be implemented using a general-purpose or special-purpose computer, such as a processor, a controller, an arithmetic logic unit (ALU), a digital signal processor (DSP), a microcomputer, a field-programmable gate array (FPGA), a programmable logic unit (PLU), a microprocessor, or any other devices capable of responding to and executing instructions. A processing device may run an OS and a software application that runs on the OS. The processing device may also access, store, manipulate, process, and generate data in response to execution of software. For purpose of simplicity, the description of a processing device is used as singular; however, one skilled in the art will appreciate that a processing device may include a plurality of processing elements and/or a plurality of types of processing elements. For example, the processing device may include a plurality of processors or a single processor and a single controller. In addition, different processing configurations are possible, such as parallel processors.

Software may include a computer program, a piece of code, an instruction, or one or more combinations thereof, to independently or collectively instruct or configure a processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable storage medium.

The methods according to the embodiments described herein may be recorded in non-transitory computer-readable media including program instructions to implement various operations of the embodiments. The non-transitory computer-readable storage media may also include, alone or in combination with the program instructions, data files, data structures, and the like. The program instructions recorded on the medium may be those specially designed and constructed for the purposes of embodiments, or they may be of the kind well-known and available to those having skill in the computer software arts. Examples of non-transitory computer-readable storage media include magnetic media such as hard disks, floppy disks, and magnetic tape; optical media such as CD-ROM discs and digital video discs (DVDs); magneto-optical media such as floptical disks; and hardware devices that are specifically configured to store and perform program instructions, such as ROM, random access memory (RAM), flash memory, and the like. Examples of program instructions include both machine code, such as produced by a compiler, and files containing higher-level code that may be executed by the computer using an interpreter.

The hardware devices described above may be configured to act as one or more software modules in order to perform the operations of the examples described above, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuitry are combined in a different manner, or replaced or supplemented by other components or their equivalents.

Therefore, other implementations, other embodiments, and equivalents to the claims are also within the scope of the following claims.

## Claims

1. An electronic device (101) comprising:
a display (160);
at least one processor (120); and
memory (130) storing instructions,
wherein the instructions, when executed by the at least one processor (120) individually or collectively, cause the electronic device (101) to:
output, on the display (160), a first screen corresponding to a first state;
receive an input for causing a transition from the first state to a second state while the first screen is output;
in response to the input, obtain a first image corresponding to the first screen that is output on the display (160);
sequentially output, on the display (160), a plurality of first transition images in which transparency of the first image is differently adjusted; and
output, on the display (160), a second image corresponding to the second state.

2. The electronic device (101) of claim 1, wherein
the first state corresponds to a home screen state in which one or more icons are displayed on a wallpaper image,
wherein the first image corresponds to a home screen image provided in the home screen state, the first image comprises at least a portion of the wallpaper image and an image portion corresponding to the one or more icons, and
wherein the second state corresponds to an always on display (AOD) state in which a digital clock image is overlaid on a modified image of the wallpaper image and the second image is output.

3. The electronic device (101) of claim 1 or 2, wherein
the first state corresponds to an application execution state in which a screen of an application is displayed,
wherein the first image corresponds to an application image provided in the application execution state, and
wherein the second state corresponds to an AOD state in which a digital clock image is overlaid on a modified image of a wallpaper image and the second image is output.

4. The electronic device (101) of any one of claims 1 to 3, wherein
the first state corresponds to a lock screen state in which a digital clock is displayed on a wallpaper image,
wherein the first image corresponds to a lock screen image provided in the lock screen state, the first image comprises at least a portion of the wallpaper image and an image portion corresponding to the digital clock, and
wherein the second state corresponds to an AOD state in which a digital clock image is overlaid on a modified image of the wallpaper image and the second image is output.

5. The electronic device (101) of any one of claims 1 to 4, wherein the instructions, when executed by the at least one processor (120) individually or collectively, cause the electronic device (101) to:
output a first sub-transition image having a first transparency level among the plurality of first transition images;
output a second sub-transition image having a second transparency level among the plurality of first transition images; and
output a third sub-transition image having a third transparency level among the plurality of first transition images, and
wherein the first transparency level is less than the second transparency level and the third transparency level, and the third transparency level is greater than the first transparency level and the second transparency level.

6. The electronic device (101) of any one of claims 1 to 5, wherein the instructions, when executed by the at least one processor (120) individually or collectively, cause the electronic device (101) to output the second image on the display (160) while at least one of the plurality of first transition images is output.

7. The electronic device (101) of any one of claims 1 to 6, wherein the instructions, when executed by the at least one processor (120) individually or collectively, cause the electronic device (101) to sequentially output, as the second image, at least one of a plurality of second transition images on the display (160) while at least one of the plurality of first transition images is output, wherein the plurality of second transition images is generated based on a wallpaper image.

8. The electronic device (101) of any one of claims 1 to 7, wherein the instructions, when executed by the at least one processor (120) individually or collectively, cause the electronic device (101) to output the second image on the display (160) after the plurality of first transition images is output.

9. The electronic device (101) of any one of claims 1 to 8, wherein the instructions, when executed by the at least one processor (120) individually or collectively, cause the electronic device (101) to sequentially output, as the second image, a plurality of second transition images on the display (160) after the plurality of first transition images is output, wherein the plurality of second transition images is generated based on a wallpaper image.

10. The electronic device (101) of any one of claims 1 to 9, wherein the plurality of second transition images is a plurality of images generated by applying a preset image effect to the wallpaper image.

11. The electronic device (101) of any one of claims 1 to 10, wherein the instructions, when executed by the at least one processor (120) individually or collectively, cause the electronic device (101) to output, on the display (160), the plurality of first transition images so as to be overlaid on the second image while the second image is output.

12. The electronic device (101) of any one of claims 1 to 11, wherein the instructions, when executed by the at least one processor (120) individually or collectively, cause the electronic device (101) to:
in response to the input, determine a first state of charge (SoC) of a battery (189) of the electronic device (101);
determine the second image corresponding to the first SoC; and
output, on the display (160), the second image corresponding to the second state.

13. The electronic device (101) of any one of claims 1 to 12, wherein the instructions, when executed by the at least one processor (120) individually or collectively, cause the electronic device (101) to:
determine whether a selected wallpaper image is a single-layer image or a multi-layer image;
based on whether the wallpaper image is the single-layer image or the multi-layer image, determine a position of a graphic object that is output in the second state;
generate the second image based on the wallpaper image; and
in response to the input, output the graphic object together with the second image corresponding to the second state.

14. A method of transitioning an operation state of an electronic device (101), the method comprising:
outputting (305), on a display (160) of the electronic device (101), a first screen corresponding to a first state;
while the first screen is output, receiving (310) an input for causing a transition from the first state to a second state;
in response to the input, obtaining (320) a first image corresponding to the first screen output on the display (160);
sequentially outputting (330), on the display (160), a plurality of first transition images in which transparency of the first image is differently adjusted; and
outputting (340), on the display (160), a second image corresponding to the second state.

15. A non-transitory computer-readable storage medium storing a program for performing the method of claim 14.
